# EUROPEAN PATENT SPECIFICATION

(11) **EP 2 602 975 B1**
(45) Date of publication and mention of the grant of the patent: **30.03.2016**
(21) Application number: 12195217.0
(22) Date of filing: 03.12.2012
(51) Int. Cl.: B29L 31/34, G06F 1/16, B29C 45/14, H01R 13/74, H04M 1/02

(54) **Mobile devices with mechanically bonded connector assemblies and methods for forming such mobile devices**
Mobile Vorrichtung mit mechanisch verbundenen Verbindungsanordnungen und Verfahren zur Herstellung derartiger mobiler Vorrichtungen
Dispositifs mobiles avec des ensembles de connecteurs liés mécaniquement et procédés pour former ces dispositifs mobiles

(30) Priority: 06.12.2011 US 201113311843
(43) Date of publication of application: 12.06.2013
(73) Proprietor: HTC Corporation, Taoyuan City 330 (TW)
(72) Inventor: Reier, Bart Peter, Cary, NC 27519 (US)
(74) Representative: Harrasz, Julia Konstanze

(56) References cited:
- EP-A1- 2 226 185
- US-A1- 2009 017 242
- US-A1- 2010 079 970
- US-A1- 2011 279 987

## Description

### TECHNICAL FIELD

The present disclosure generally relates to mobile devices.

### BACKGROUND

Various devices such as mobile devices (e.g., smartphones, handheld GPS devices, etc.) trend toward the characteristics of small size and light weight. This is particularly the case with housings of such devices. However, it is difficult to reduce the weight of such devices without reducing desirable mechanical properties, such as resistance to torsional loads.

### SUMMARY

It is an object of the present invention to provide a mobile device and a method for forming the mobile device. This object can be achieved by the features of the independent claims. Further enhancements are characterized in the dependent claims. Briefly described, one example embodiment, among others, is a mobile device that incorporates a housing, wherein the housing comprises a metal chassis; and a plastic connector assembly mechanically bonded to the metal of the chassis.

Another example embodiment is a method for forming a mobile device comprising: providing a metal chassis, the chassis defining an interior; and mechanically bonding a plastic connector assembly to the chassis, the connector being located within the interior.

Another example embodiment comprises a mobile device formed by a disclosed method.

Other systems, methods, features and/or advantages of the present disclosure will be or may become apparent to one with skill in the art upon examination of the following drawings and detailed description. It is intended that all such additional systems, methods, features, and advantages be included within this description, be within the scope of the present disclosure, and be protected by the accompanying claims. EP2226185A1, US20090017242A1, US20100079970A1 and US20110279987A1 may be regarded as useful background art for understanding the invention.

### BRIEF DESCRIPTION OF THE DRAWINGS

Many aspects of the disclosure may be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.
FIG. 1 is a partially-exploded, schematic view of an example embodiment of a mobile device.
FIG. 2 is a partially cut-away, cross-sectional view of the embodiment of FIG. 1 showing detail of a flow portion of the plastic part and a corresponding recess.
FIG. 3 is a flowchart depicting an example embodiment of a method for forming a mobile device.
FIG. 4 is a flowchart depicting another example embodiment of a method for forming a mobile device.
FIGS. 5-7 are schematic views showing detail of two connector assemblies.

### DETAILED DESCRIPTION

Having summarized various aspects of the present disclosure, reference will now be made in detail to that which is illustrated in the drawings.

Mobile devices with mechanically bonded connector assemblies and methods for forming such mobile devices are provided. In some embodiments, recesses are formed in a metal chassis and then the chassis is placed in a mold. Plastic is flowed into the mold to form at least a portion of a connector assembly and portions of the plastic enter the recesses prior to solidifying. The flow portions of the plastic positioned within the recesses create unexpectedly firm mechanical bonds. In some embodiments, the plastic is used to create guide ribs that define a cavity into which a connector is placed. By way of further example, the plastic may be used to form the connector itself.

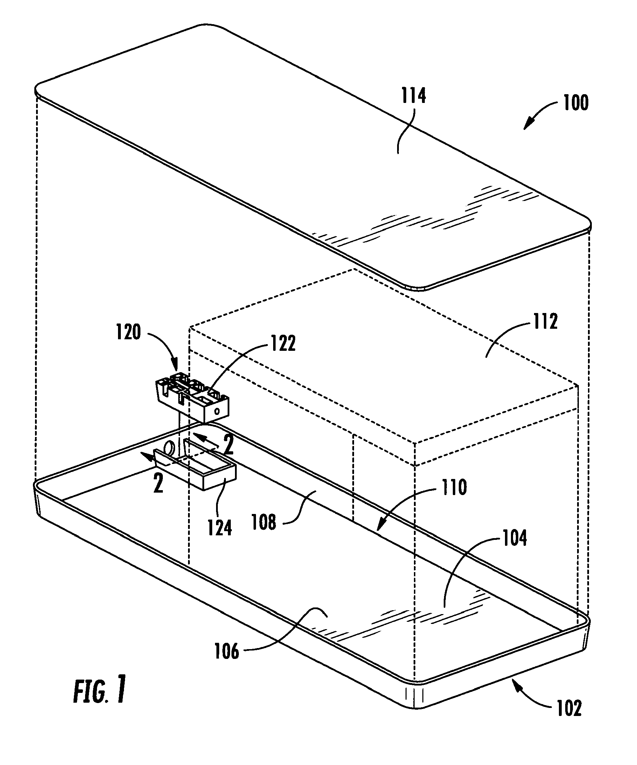

As shown in FIG. 1, an embodiment of a mobile device 100 includes a housing 102 that incorporates a metal chassis 104. The chassis incorporates a base 106 and a sidewall 108, with the sidewall extending outwardly from the base and being positioned about the periphery of the base. The housing defines an interior 110 in which internal components112 (the details of which are not described herein) are mounted. A transparent cover 114 engages the housing to encase the internal components.

Also mounted within the interior is a connector assembly 120 that includes a connector body 122 and guide ribs 124. The guide ribs are directly molded to the metal chassis by flowing plastic into recesses that are formed in the surface of the chassis. As such, the recesses form bonding locations for the plastic ribs.

In this embodiment, the recesses are formed by chemically etching the recesses into the surface of the chassis using a process known as Nano Molding Technology (NMT). In other embodiments, various other forms of direct metal-to-plastic bonding techniques may be used. For instance, in other embodiments, other methods for forming recesses may be used. Additionally, or alternatively, various adhesion methods, such as selective surface application of adhesive primer on a chassis may be performed prior to introducing plastic into the mold, among others.

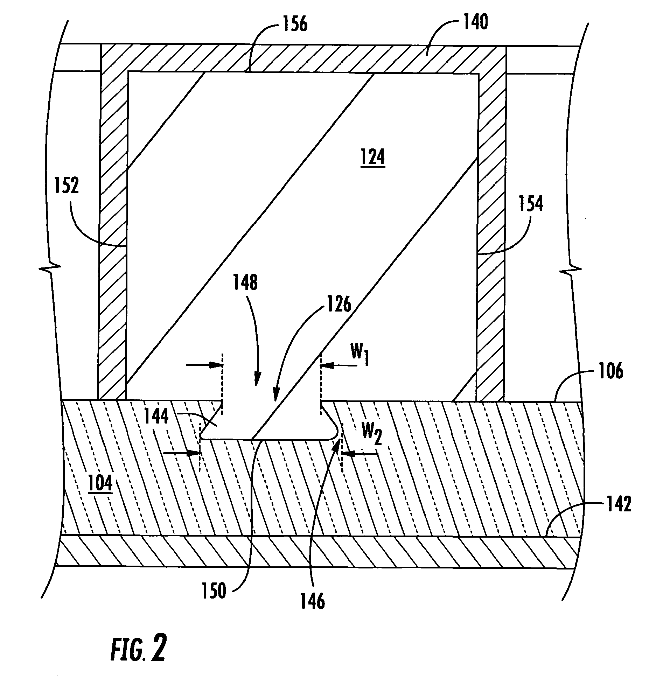

In the embodiment of FIGs. 1 and 2, the recesses are arranged to form the bonding locations at which the guide ribs are to mechanically bond to the metal of the chassis. Specifically, the recesses are positioned at locations where the ribs contact the chassis.

As shown in more detail in FIG. 2, after forming the recesses, the housing is positioned within a mold that includes mold surfaces 140,142. Plastic is flowed into the mold and a flow portion 144 of the plastic enters the recess where it is permitted to harden. Preferably, a viscosity of the plastic is selected to enable the plastic to completely fill the recess although some voids (e.g., void 146) may be present

In this embodiment, the recesses exhibit necked regions that essentially form interference fits with respective flow portions of the plastic part. For instance, recess 126 exhibits a width that varies with respect to its depth to form a necked region 148 with a width (w₁) that is narrower than the width (w₂) of base 150. Various other dimensions of a recess that may or may not include a necked region may be used in other embodiments.

In the embodiment of FIG. 2, guide rib 124 includes opposing surfaces 152, 154 and an upper surface 156 such that the cross-section of the guide rib is substantially rectangular.

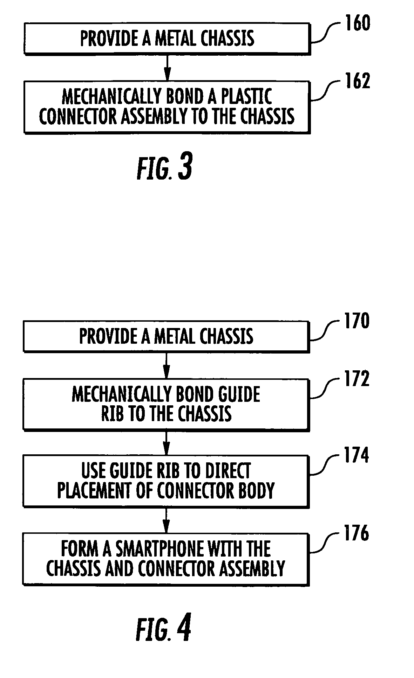

FIG. 3 is a flowchart depicting an exemplary embodiment of a method for forming a mobile device. As shown in FIG. 3, the method includes: providing a metal chassis, with the chassis defining an interior (block 160); and mechanically bonding a plastic connector assembly to the chassis via flow portions of the plastic, with the connector being located within the interior (block 162). In some embodiments, a connector body of the connector assembly is mechanically bonded to the chassis. However, there are other manners of providing a connector assembly.

In this regard, FIG. 4 is a flowchart depicting another exemplary embodiment of a method. As shown in FIG.4, the method includes: providing a metal chassis, with the chassis defining an interior (block 170). In block 172, a guide rib of a plastic connector assembly is mechanically bonded to the chassis via flow portions of the plastic, with the connector being located within the interior. As depicted in block 174, the guide rib is used to direct placement of the connector body during mounting of the connector body to the chassis. In block 176, the chassis and connector assembly are used to form a smartphone.

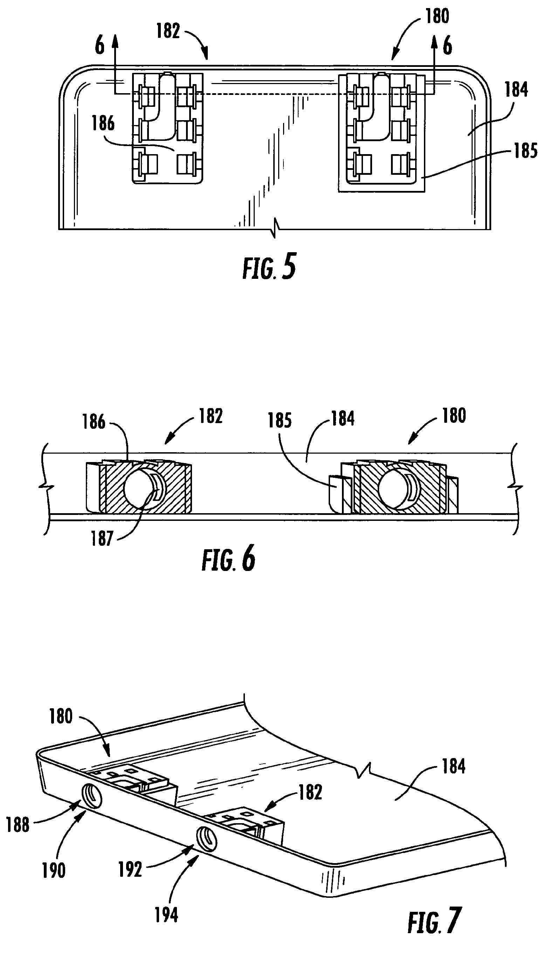

FIGS. 5-7 are schematic views showing detail of two connector assemblies for ease of comparison. Specifically, connector assembly 180, which is similar to that described before with respect to connector assembly 120 of FIG. 1, and connector assembly 182 are shown mounted to a chassis 184.

In contrast to forming guide ribs (e.g., guide ribs 185), connector assembly 182 lacks such ribs. Notably, connector body 186 is formed directly onto the chassis during the molding process in the manner described before for forming the guide ribs. As such, connector assembly 182 uses less space than connector assembly 180 even though the dimensions of the connector bodies are identical. After forming of connector body 186, electrical contacts (e.g., contact 187) are loaded into the connector body to complete the installation.

Note in FIG. 7 that receptacles of the connector assemblies are aligned with corresponding through-holes positioned along the sidewall of the chassis. Specifically, receptacle 188 is aligned with through-hole 190, and receptacle 192 is aligned with through-hole 194.

By providing connector assemblies such as the example embodiments described above, there is no need to provide non-cosmetically acceptable mechanical interlocks, which are currently needed for traditional insert molding techniques. Additionally, high precision of connector body placement may be achieved either directly in the mold process or indirectly by using guide ribs. Further, mechanically bonding the connector assembly to the chassis provides for a cleaner interface and allows the through-hole of the chassis to be smaller since cumulative assembly tolerances are reduced.

It should be emphasized that the above-described embodiments are merely examples of possible implementations. Many variations and modifications may be made to the above-described embodiments without departing from the principles of the present disclosure. All such modifications and variations are intended to be included herein within the scope of this disclosure and protected by the following claims.

## Claims

1. A mobile device (100) comprising:
a housing (102) comprising a metal chassis (104,184), the metal chassis having a base (106) and a sidewall (108), the sidewall extending upwardly from the base at a perimeter thereof, the base and the side wall having a plurality of first recesses (126) formed by chemically etching the plurality of first recesses into the surface of the base and the sidewall; **characterised by**
a plastic connector assembly (120,180,182) comprising a connector body (122,186) and a guide rib (124,185) having a plurality of first flow portions, the guide rib is a U-shaped member having distal ends, the guide rib extends upwardly from the base and inwardly from the sidewall, the plurality of recesses formed along the U-shaped member and the distal ends on the metal chassis, the U-shaped member being mechanically bonded to the plurality of the first recesses on the base via the plurality of the first flow portions, the distal ends being mechanically bonded to the plurality of the first recesses on the sidewall via the plurality of the first flow portions, the guide rib forming a cavity sized and shaped to facilitate placement of the connector body having an electrical contact on the metal chassis.

2. The mobile device of claim 1, wherein the guide rib defines a cavity sized to receive the connector body and shaped to orient the connector body relative to the chassis.

3. The mobile device of claim 1, wherein the connector assembly comprises a connector body (122,186) mechanically bonded to the metal of the chassis.

4. A method for forming the mobile device according to any one of the preceding claims, comprising:
providing (160,170) a metal chassis (104,184), the chassis defining an interior (110) and the metal chassis having a base (106) and a sidewall (108), the sidewall extending upwardly from the base at a perimeter thereof, the base and the side wall having a plurality of first recesses (126) formed by chemically etching the plurality of first recesses into the surface of the base and the sidewall **characterised by**;
mechanically bonding a guide rib (124,185) having a plurality of first flow portions to the plurality of first recesses via the plurality of first flow portions, the guide rib being a U-shaped member having distal ends, the guide rib extends upwardly from the base and inwardly from the sidewall, the plurality of recesses forming along the U-shaped member and the distal ends on the metal chassis, the U-shaped member being mechanically bonded to the plurality of the first recesses on the base via the plurality of the first flow portions, the distal ends being mechanically bonded to the plurality of the first recesses on the sidewall via the plurality of the first flow portions; and
placing a connector body (122,186) having electrical contacts in the metal chassis, the placing being facilitated by the shape and size of a cavity formed in the guide rib.

5. The method of claim 4, further comprising using (174) the guide rib to direct placement of the connector body during mounting of the connector body to the chassis.

6. The method of claim 4, further comprising loading (176) the electrical contacts into the connector body.

## Patentansprüche

1. Eine mobile Vorrichtung (100), die Folgendes beinhaltet:
ein Gehäuse (102), das einen Metallrahmen (104, 184) beinhaltet, wobei der Metallrahmen eine Basis (106) und eine Seitenwand (108) aufweist, wobei sich die Seitenwand von der Basis an einem Perimeter davon aufwärts erstreckt, wobei die Basis und die Seitenwand eine Vielzahl von ersten Aussparungen (126) aufweisen, die durch chemisches Ätzen der Vielzahl von ersten Aussparungen in die Oberfläche der Basis und der Seitenwand gebildet wurden; **gekennzeichnet durch**
eine Kunststoffverbinderanordnung (120, 180, 182), die einen Verbinderkörper (122, 186) und eine Führungsrippe (124, 185) mit einer Vielzahl von ersten Fließabschnitten beinhaltet, wobei die Führungsrippe ein U-förmiges Element mit distalen Enden ist, sich die Führungsrippe von der Basis aufwärts und von der Seitenwand einwärts erstreckt, die Vielzahl von Aussparungen entlang dem U-förmigen Element und den distalen Enden auf dem Metallrahmen gebildet ist, das U-förmige Element über die Vielzahl der ersten Fließabschnitte mechanisch an der Vielzahl der ersten Aussparungen auf der Basis befestigt ist, die distalen Enden über die Vielzahl der ersten Fließabschnitte mechanisch an der Vielzahl der ersten Aussparungen an der Seitenwand befestigt sind, die Führungsrippe einen Hohlraum bildet, der bemessen und geformt ist, um die Platzierung des Verbinderkörpers mit einem elektrischen Kontakt auf dem Metallrahmen zu erleichtern.

2. Mobile Vorrichtung gemäß Anspruch 1, wobei die Führungsrippe einen Hohlraum definiert, der bemessen ist, um den Verbinderkörper aufzunehmen, und geformt ist, um den Verbinderkörper relativ zu dem Rahmen auszurichten.

3. Mobile Vorrichtung gemäß Anspruch 1, wobei die Verbinderanordnung einen Verbinderkörper (122, 186) beinhaltet, der mechanisch an dem Metall des Rahmens befestigt ist.

4. Ein Verfahren zum Bilden der mobilen Vorrichtung gemäß einem der vorhergehenden Ansprüche, das Folgendes beinhaltet:
Bereitstellen (160,170) eines Metallrahmens (104, 184), wobei der Rahmen einen Innenraum (110) definiert und der Metallrahmen eine Basis (106) und eine Seitenwand (108) aufweist, wobei sich die Seitenwand von der Basis an einem Perimeter davon aufwärts erstreckt, wobei die Basis und die Seitenwand eine Vielzahl von ersten Aussparungen (126) aufweisen, die durch chemisches Ätzen der Vielzahl von ersten Aussparungen in die Oberfläche der Basis und der Seitenwand gebildet wurden;
**gekennzeichnet durch**
mechanisches Befestigen einer Führungsrippe (124, 185) mit einer Vielzahl von ersten Fließabschnitten an der Vielzahl von ersten Aussparungen über die Vielzahl von ersten Fließabschnitten, wobei die Führungsrippe ein U-förmiges Element mit distalen Enden ist, sich die Führungsrippe von der Basis aufwärts und von der Seitenwand einwärts erstreckt, die Vielzahl von Aussparungen entlang dem U-förmigen Element und den distalen Enden auf dem Metallrahmen gebildet ist, das U-förmige Element über die Vielzahl der ersten Fließabschnitte mechanisch an der Vielzahl der ersten Aussparungen auf der Basis befestigt ist, die distalen Enden über die Vielzahl der ersten Fließabschnitte mechanisch an der Vielzahl der ersten Aussparungen an der Seitenwand befestigt sind; und
Platzieren eines Verbinderkörpers (122, 186) mit elektrischen Kontakten in dem Metallrahmen, wobei das Platzieren **durch** die Form und Größe eines in der Führungsrippe gebildeten Hohlraums erleichtert wird.

5. Verfahren gemäß Anspruch 4, das ferner das Verwenden (174) der Führungsrippe zum Lenken der Platzierung des Verbinderkörpers während der Montage des Verbinderkörpers an dem Rahmen beinhaltet.

6. Verfahren gemäß Anspruch 4, das ferner das Laden (176) der elektrischen Kontakte in den Verbinderkörper beinhaltet.

## Revendications

1. Un dispositif mobile (100) comprenant :
un logement (102) comprenant un châssis en métal (104, 184), le châssis en métal ayant une base (106) et une paroi latérale (108), la paroi latérale s'étendant vers le haut depuis la base au niveau d'un périmètre de celle-ci, la base et la paroi latérale ayant une pluralité de premiers renfoncements (126) formés par gravure chimique de la pluralité de premiers renfoncements dans la surface de la base et de la paroi latérale ;
**caractérisé par**
un assemblage formant connecteur en plastique (120, 180, 182) comprenant un corps de connecteur (122, 186) et une nervure guide (124, 185) ayant une pluralité de premières portions d'écoulement, la nervure guide étant un élément en forme de U ayant des extrémités distales, la nervure guide s'étendant vers le haut depuis la base et vers l'intérieur depuis la paroi latérale, la pluralité de renfoncements étant formés le long de l'élément en forme de U et des extrémités distales sur le châssis en métal, l'élément en forme de U étant lié de façon mécanique à la pluralité des premiers renfoncements sur la base par le biais de la pluralité des premières portions d'écoulement, les extrémités distales étant liées de façon mécanique à la pluralité des premiers renfoncements sur la paroi latérale par le biais de la pluralité des premières portions d'écoulement, la nervure guide formant une cavité dimensionnée et formée pour faciliter la disposition du corps de connecteur ayant un contact électrique sur le châssis en métal.

2. Le dispositif mobile de la revendication 1, dans lequel la nervure guide définit une cavité dimensionnée pour recevoir le corps de connecteur et formée pour orienter le corps de connecteur relativement au châssis.

3. Le dispositif mobile de la revendication 1, dans lequel l'assemblage formant connecteur comprend un corps de connecteur (122, 186) lié de façon mécanique au métal du châssis.

4. Une méthode pour former le dispositif mobile selon l'une quelconque des revendications précédentes, comprenant :
la fourniture (160, 170) d'un châssis en métal (104, 184), le châssis définissant un intérieur (110) et le châssis en métal ayant une base (106) et une paroi latérale (108), la paroi latérale s'étendant vers le haut depuis la base au niveau d'un périmètre de celle-ci, la base et la paroi latérale ayant une pluralité de premiers renfoncements (126) formés par gravure chimique de la pluralité de premiers renfoncements dans la surface de la base et de la paroi latérale ; **caractérisée par**
la liaison mécanique d'une nervure guide (124, 185) ayant une pluralité de premières portions d'écoulement à la pluralité de premiers renfoncements par le biais de la pluralité de premières portions d'écoulement, la nervure guide étant un élément en forme de U ayant des extrémités distales, la nervure guide s'étendant vers le haut depuis la base et vers l'intérieur depuis la paroi latérale, la pluralité de renfoncements étant formés le long de l'élément en forme de U et des extrémités distales sur le châssis en métal, l'élément en forme de U étant lié de façon mécanique à la pluralité des premiers renfoncements sur la base par le biais de la pluralité des premières portions d'écoulement, les extrémités distales étant liées de façon mécanique à la pluralité des premiers renfoncements sur la paroi latérale par le biais de la pluralité des premières portions d'écoulement ; et
la disposition d'un corps de connecteur (122, 186) ayant des contacts électriques dans le châssis en métal, la disposition étant facilitée par la forme et la taille d'une cavité formée dans la nervure guide.

5. La méthode de la revendication 4, comprenant en sus l'utilisation (174) de la nervure guide pour diriger la disposition du corps de connecteur durant le montage du corps de connecteur sur le châssis.

6. La méthode de la revendication 4, comprenant en sus le chargement (176) des contacts électriques dans le corps de connecteur.
